# EUROPEAN PATENT APPLICATION

(11) **EP 4 563 205 A1**
(43) Date of publication of application: **04.06.2025**
(21) Application number: 24216170.1
(22) Date of filing: 28.11.2024
(51) Int. Cl.: A63F 13/75, A63F 13/71, A63F 13/79

(54) **METHOD, SYSTEM, AND MACHINE-READABLE MEDIUM**

(30) Priority: 29.11.2023 JP 2023201940
(71) Applicant: Nintendo Co., Ltd., Kyoto 601-8501 (JP)
(72) Inventor: DOHTA, TAKUHIRO, Kyoto, 601-8501 (JP); KAWAMOTO, Koichi, Kyoto, 601-8501 (JP); SASAKI, TETSUYA, Kyoto, 601-8501 (JP); SAKAI, Hitoshi, Kyoto, 601-8501 (JP); ISHIKAWA, Shota, Kyoto, 601-8501 (JP); KAWAHARA, Takahiro, Kyoto, 601-8501 (JP); KAWAMATA, Satoshi, Kyoto, 601-8501 (JP)
(74) Representative: Bardehle Pagenberg Partnerschaft mbB Patentanwälte Rechtsanwälte

(57) **Abstract**

A method, a system, and a program include associating an account and a game content with each other, associating the account with each of a plurality of terminals, changeably associating one terminal selected from the plurality of terminals with which, for each game content obtained by the account, the game content and the account are associated, and permitting play of the game content with the one terminal with which the game content is associated, and restricting play of the game content with a terminal other than the one terminal of the plurality of terminals.

## Description

The present disclosure relates to a method, a system, and a machine-readable medium.

### INTRODUCTION

Japanese Patent Laying-Open No. 2016-66321 discloses a system in which contents stored in a server are downloaded to a game device.

A manner in which one user possesses one game device has conventionally often been seen as a manner of possession of a game device. In recent years, however, manners of possession of game devices are various; there are more cases in which a single user possesses and uses a plurality of game devices and more cases in which a single game device is shared among a plurality of users.

In such a situation, relation among a game device, an account introduced in the game device, a game content purchased by each account, and the like becomes complicated and it may become difficult for a user to grasp which user can play which game content with which game device.

### SUMMARY

According to the present disclosure, a scheme for allowing a user to readily grasp a game device with which a desired game content can be played is provided.

(Configuration 1) A method according to one embodiment is a method performed by one or more processors. The method includes associating a first account with a game content obtained by the first account through a network, associating the first account with each of a plurality of terminals being configured to be associated with one or more accounts, changeably associating each game content obtained by the first account with one terminal selected from the plurality of terminals with which the first account is associated, and permitting play of the game content, with the one terminal with which the game content is associated, by one or more accounts not limited to the first account, and restricting play of the game content with a terminal other than the one terminal of the plurality of terminals with which the first account is associated.

(Configuration 2) In Configuration 1, the method further includes permitting play of the game content, with the one terminal with which the game content is associated regardless of whether the one terminal is on-line or off-line.

(Configuration 3) Configuration 1 or 2 further includes canceling association between the one terminal and the game content.

(Configuration 4) Any configuration of Configurations 1 to 3 further includes changeably associating again the game content, association of which with the one terminal has been canceled, with at least one terminal selected from the plurality of terminals with which the first account is associated.

(Configuration 5) Any configuration of Configurations 1 to 4 further includes registering one or more terminals as registered terminal of the first account. The registered terminal of the first account is configured to be associated with the game content associated with the first account. The number of the one or more terminals as registered terminal of the first account is limited to a predetermined number.

(Configuration 6) In Configuration 5, each of the plurality of terminals can be registered as a registered terminal for each different account.

(Configuration 7) Configuration 5 or 6 further includes determining whether one terminal of the plurality of terminals is located within a predetermined range from a registered terminal of the first account. The registering one or more terminals as registered terminal of the first account includes additionally registering, when the one terminal is determined as being within the predetermined range from the registered terminal in the determining, the one terminal as the registered terminal.

(Configuration 8) Configuration 5 further includes determining whether a terminal different from the registered terminal is located within a prescribed range from a registered terminal of the first account and permitting, when the terminal different from the registered terminal is determined as being located within the prescribed range from the registered terminal, the terminal different from the registered terminal to temporarily play the game content and restricting play of the game content with a terminal other than the terminal different from the registered terminal.

(Configuration 9) In Configuration 8, each of the plurality of accounts is permitted to belong to a group, a finite number of accounts being permitted to belong to the group, each of the plurality of accounts being permitted to belong to only a single group, and the terminal different from the registered terminal permitted to temporarily play the game content is associated with an account belonging to the same group to which the first account associated with the game content belongs.

(Configuration 10) Configuration 8 further includes setting the game content to a state in which the game content is associated with no terminal, based on end of temporary use.

(Configuration 11) Any configuration of Configurations 1 to 10 further includes permitting, in response to input by the first account, also play of the game content by the first account with the terminal associated with the first account when the game content and the first account are associated with each other, regardless of whether the one terminal associated with the first account is associated with the game content.

(Configuration 12) Configuration 11 further includes restricting play with another terminal when the game content is being played with at least one of the terminals associated with the first account.

(Configuration 13) Any configuration of Configurations 1 to 12 includes showing, in at least one of the plurality of terminals with which the first account is associated, a plurality of game contents associated with the first account, in such a manner that a game content associated with the terminal and a non-associated game content not associated with the terminal are distinguishable from each other.

(Configuration 14) In Configuration 13, the non-associated game content is shown in such a manner as being indistinguishable as to whether the non-associated game content is associated with at least one of the plurality of terminals with which the first account is associated or associated with none of the terminals.

(Configuration 15) A system according to one embodiment includes a server that manages a first account and a plurality of terminals, each of the plurality of terminals being configured to be associated with one or more accounts. The server is configured to perform associating the first account with a game content obtained by the first account through a network, associating the first account with each of the plurality of terminals, changeably associating each game content obtained by the first account with one terminal selected from the plurality of terminals with which the first account is associated, and permitting play of the game content, with the one terminal with which the game content is associated, by one or more accounts not limited to the first account, and restricting play of the game content with a terminal other than the one terminal of the plurality of terminals with which the first account is associated.

(Configuration 16) A program according to one embodiment causes a processor that communicates with a plurality of terminals, each of the plurality of terminals being configured to be associated with one or more accounts, to perform associating a first account with a game content obtained by the first account through a network, associating the first account with each of the plurality of terminals, each of the plurality of terminals being configured to be associated with one or more accounts, changeably associating each game content obtained by the first account with one terminal selected from the plurality of terminals with which the first account is associated, and permitting play of the game content, with the one terminal with which the game content is associated, by one or more accounts not limited to the first account, and restricting play of the game content with a terminal other than the one terminal of the plurality of terminals with which the first account is associated.

### BRIEF DESCRIPTION OF THE DRAWINGS

Fig. 1 shows an exemplary illustrative non-limiting drawing showing an exemplary information processing system according to a first embodiment.
Fig. 2 shows an exemplary illustrative non-limiting drawing showing an exemplary hardware configuration of a server included in the information processing system according to the first embodiment.
Fig. 3 shows an exemplary illustrative non-limiting drawing showing an exemplary hardware configuration of a game device included in the information processing system according to the first embodiment.
Fig. 4 shows an exemplary illustrative non-limiting drawing showing a timing chart for illustrating a flow from purchase of a game device to registration.
Fig. 5 shows an exemplary illustrative non-limiting drawing showing an exemplary table to manage game contents owned by a user.
Fig. 6 shows an exemplary illustrative non-limiting drawing showing an exemplary table for management of a registered terminal.
Fig. 7 shows an exemplary illustrative non-limiting drawing showing a timing chart for illustrating a flow of registration of a second game device.
Fig. 8 shows an exemplary illustrative non-limiting drawing showing a timing chart for illustrating a flow of execution of a content A.
Fig. 9 shows an exemplary illustrative non-limiting drawing showing an exemplary diagram showing a display on which an object representing a content owned by a user A is shown.
Fig. 10 shows an exemplary illustrative non-limiting drawing showing another exemplary display on which an object representing a content owned by user A is shown.
Fig. 11 shows an exemplary illustrative non-limiting drawing showing a first drawing showing the display on which a menu of a game device is shown.
Fig. 12 shows an exemplary illustrative non-limiting drawing showing a second drawing showing the display on which the menu of the game device is shown.
Fig. 13 shows an exemplary illustrative non-limiting drawing showing an exemplary table for management of a group to which a user belongs.
Fig. 14 shows an exemplary illustrative non-limiting drawing showing a timing chart for illustrating a flow of temporary use of a content.

### DETAILED DESCRIPTION

The present embodiment will be described in detail with reference to the drawings. The same or corresponding elements in the drawings have the same reference characters allotted and description thereof will not be repeated.

### <First Embodiment>

### [A. Overview]

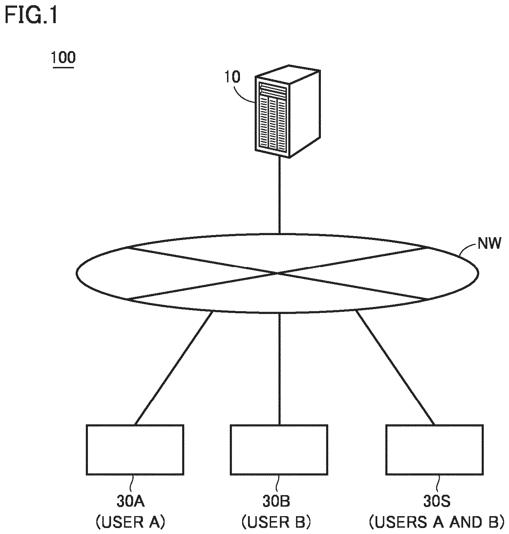

An exemplary configuration of an information processing system according to the present embodiment will be described. Fig. 1 is a schematic diagram showing an exemplary information processing system 100 according to a first embodiment. Information processing system 100 is a system that manages a game content downloaded to game devices 30A, 30B, and 30S through a network NW.

In an example in Fig. 1, information processing system 100 includes a server 10 and game devices 30A, 30B, and 30S. Communication between server 10 and each of game devices 30A, 30B, and 30S is established over network NW. Network NW is typically the Internet.

Though Fig. 1 shows the example where only game devices 30A, 30B, and 30S are connected to server 10, the number of connected game devices is not limited as such.

Fig. 1 shows server 10 as a single apparatus. Server 10, however, may be implemented as an assembly of a plurality of apparatuses. For example, server 10 may include a plurality of servers. Similarly, a game device 30 may also be implemented as an assembly of a plurality of apparatuses. For example, game device 30 may be configured with a main body portion including at least a processor and a terminal portion including at least an operation portion.

In the present embodiment, an account of a user A is introduced in game device 30A. An account of a user B is introduced in game device 30B. Accounts of user A and user B are introduced in game device 30S. Game devices 30A, 30B, and 30S are collectively referred to as "game device 30" below. The "user" may correspond to the meaning of the "account" below.

In the present embodiment, a plurality of accounts can be introduced in game device 30. In the present embodiment, in one scene, game device 30 may have a user who is operating game device 30 select an account. By way of example, in executing a certain game content, game device 30 has the user log in to the account for play. Specifically, the game device has the user select one of a plurality of introduced accounts, has the user log in to the selected account, and executes a game content. In execution of the game content, game device 30 executes the game content by using saved data for a user account to which the user has logged in or set sensitivity for input provided to an input portion of a controller, by way of example. Depending on a game content to be executed, game device 30 does not have to request selection of the account. Game device 30 may request as appropriate selection of the account also in a scene other than execution of the game content. In the present embodiment, in game device 30, a single account can be logged in at the same time. In the present embodiment, accounts introduced in game device 30 are each managed by server 10. In another example, introduction of an account not managed by server 10 in game device 30 may be allowed.

Users A and B can download a desired game content, or more specifically a game content program for execution of the game content, from server 10 to game device 30, by payment of a price to a game company or the like. Specifically, in the present embodiment, the user does not purchase in a store, a physical storage device (which is referred to as a game card or a game cartridge) where the game content is stored but downloads the game content to game device 30 over the Internet. When game device 30 is adapted to a physical game card, a game may be played with the use also of the physical game card.

Server 10 is managed by a game company by way of example, and a wide variety of game contents are stored therein. A user who purchases a game content and the purchased game content are stored in server 10 in association with each other. "Association" in the present disclosure encompasses also indirect association with a plurality of servers or tables being interposed.

As shown in Fig. 1, each of a plurality of users (users A and B) possesses a game device (game device 30A, 30B) in which only an account of the user himself/herself is introduced. On the other hand, there is also a game device (game device 30S) in which accounts of the plurality of users (users A and B) are introduced.

In such a situation, one user can play a game with a plurality of game devices. For example, at some time, user A can play a game with game device 30A and at some time, user A can play a game with game device 30S. Furthermore, at some time, user A may play a game also with game device 30B in which the account of user A himself/herself is not introduced.

In such a situation, relation among game device 30, an account introduced in game device 30, and a game content purchased by each account becomes complicated, and it may become difficult for the user to grasp which user can play which game content with which game device. Then, in information processing system 100 in the present embodiment, with a method which will be described below, a downloaded game content can be handled as if it were a physical storage device (what is called a game card), so that the user can readily know game device 30 with which the user can play a desired game content.

### [B. Exemplary Hardware Configuration]

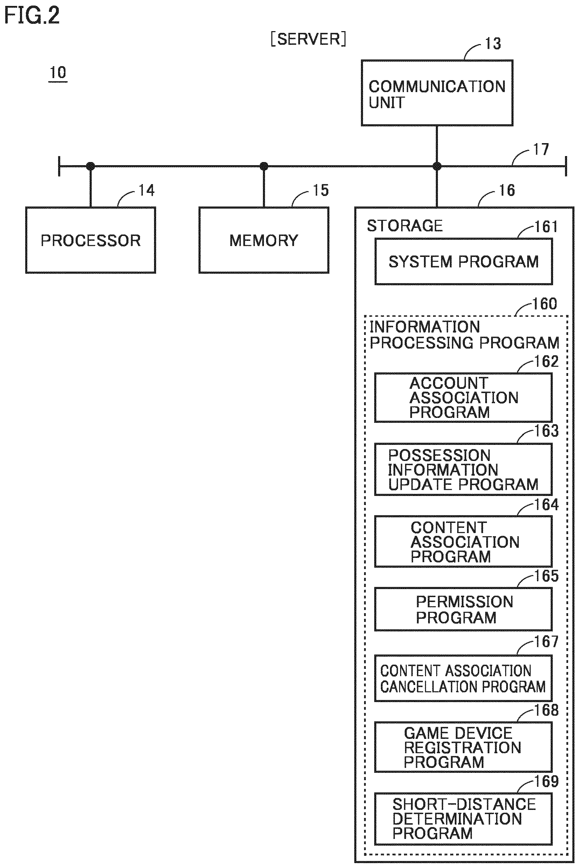

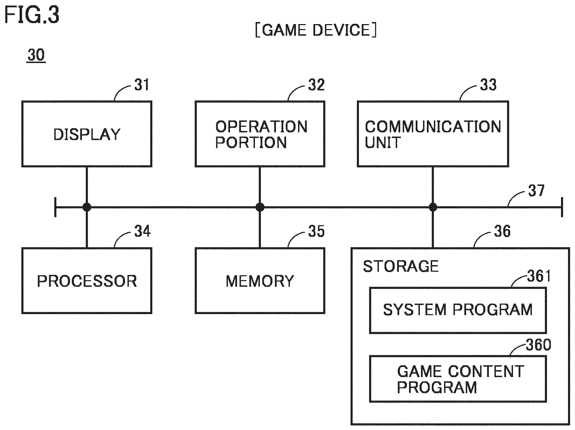

An exemplary hardware configuration of server 10 and game device 30 included in information processing system 100 according to the present embodiment will be described below with reference to Figs. 2 and 3.

Fig. 2 is a schematic diagram showing an exemplary hardware configuration of server 10 included in information processing system 100 according to the first embodiment. Referring to Fig. 2, server 10 includes one or more processors 14, a memory 15, a storage 16, and a communication unit 13. These components are connected to one another through a bus 17 to be able to communicate data among them. Server 10 may be a dedicated information processing apparatus that manages a communication game or may be implemented by a general-purpose server.

Communication unit 13 communicates with game device 30 over network NW. Communication unit 13 is provided with hardware necessary for wired communication and/or hardware necessary for wireless communication. The entirety or a part of processing by communication unit 13 may be performed by processor 14.

Processor 14 is a processing entity (processing means) for performing processing provided by server 10. The term "processor" in the present disclosure encompasses processing circuitry that performs processing in accordance with instruction codes described in a program, such as a central processing unit (CPU), a micro processing unit (MPU), or a graphics processing unit (GPU), circuitry in which a plurality of functions are integrated, such as a system on chip (SoC), hard-wired circuitry, and the like.

Memory 15 is a volatile storage device (storage medium) accessible by processor 14, and for example, a dynamic random access memory (DRAM) or a static random access memory (SRAM) may be employed. Storage 16 is a non-volatile storage device (storage medium) accessible by processor 14, and for example, a hard disk or a flash memory may be employed. Storage 16 may be a storage medium attachable to and removable from server 10, such as an optical disc and a cartridge.

A system program 161 and an information processing program 160 executed by processor 14 are stored in storage 16. Processor 14 reads system program 161 and information processing program 160, and develops the same on memory 15 for execution. System program 161 is a program for operating server 10 and includes, for example, an operating system (OS) and firmware. Memory 15 is not limited to a volatile storage device (auxiliary storage device) but may be a non-volatile storage device (main storage device). The term "memory" herein encompasses at least a memory and a storage.

Information processing program 160 includes an account association program 162, a possession information update program 163, a content association program 164, a permission program 165, a content association cancellation program 167, a game device registration program 168, and a short-distance determination program 169.

Account association program 162 is a program for storage of an account and game device 30 in association with each other. By way of example, in introduction of a user account of user A in game device 30A, user A inputs an ID, a password, and the like associated with the user account owned by the user himself/herself to game device 30A connected to network NW. Account information (a mail address, an age, payment information, information on a group which will be described later, or the like) of user A is stored in server 10 in advance. The account is basically generated for each user who uses information processing system 100. Server 10 executes account association program 162 based on reception of an appropriate ID and an appropriate password from the user. As account association program 162 is executed, processing for associating game device 30A with the account of user A is performed and the account of user A is introduced in game device 30A. In another example, in response to an access from a game device other than game device 30A or a terminal device such as a smartphone, processing for associating a certain account with certain game device 30 may be performed.

Possession information update program 163 is a program for associating a user with a game content obtained by the user over network NW. In other words, possession information update program 163 is a program for management of the game content owned by the user. For example, when the user purchases a game content, possession information update program 163 performs processing for generating a record showing purchase of the game content by the user. The account of the user and the game content obtained by the user are thus stored in server 10 in association with each other.

Content association program 164 is a program for associating the game content obtained by the user with game device 30 that can use the game content.

Permission program 165 is a program that generates, when the content association program appropriately associates the game content with game device 30, a permission signal to permit associated game device 30 to play the content. Game device 30 is configured to be able to execute the game content stored therein based on reception of the permission signal from server 10. In other words, game device 30 is configured not to be able to execute the game content unless it receives the permission signal. Association of the game content owned by the user in a data format with game device 30 as a result of execution of content association program 164 and permission by permission program 165 of play of the game content with associated game device 30 may be referred to as "virtual insertion of a game content in game device 30" or "insertion of a virtual game card in game device 30" below. In other words, "insertion of the virtual game card in game device 30" in the present embodiment does not directly mean downloading of a game content program to game device 30. How to permit play of the game content stored in game device 30 based on the permission signal is not particularly limited. By way of example, the permission signal may include key information for execution of the game content program stored in game device 30.

In information processing system 100 in the present embodiment, in game device 30 in which the game content has virtually been inserted as a result of execution of content association program 164 and permission program 165, all accounts introduced in game device 30 are able to play the virtually inserted game content. On the other hand, in information processing system 100, in game device 30 in which the game content has not virtually been inserted, play of the game content is restricted. In other words, unless the user inserts the virtual game card in game device 30, the user is unable to play the game content corresponding to the virtual game card.

More specifically, initially, user A purchases a content A among a plurality of game contents stored in server 10, and downloads the game content program for execution of content A to game device 30S. The user then inserts the virtual game card of content A in game device 30S. In other words, "insertion of the virtual game card" does not directly mean downloading of the game content program but means permission of play of the game content program that has been downloaded (or that will be downloaded in the future). Insertion of the virtual game card (that is, permission to play content A) may be performed simultaneously with downloading of content A. With the virtual game card of content A having been inserted in game device 30S and the game content program of content A having been downloaded to game device 30S, user A can play content A with game device 30S. With the virtual game card of content A having been inserted in game device 30S, another user who is not user A, such as user B (the account of user B), can also play content A with game device 30S. This is the same as a case where, when a game content is stored in a physical game card, everyone can play the game content with a game device in which the physical game card has been inserted. In play of the game content, the virtual game card of which has been inserted, a request for selection of the account does not have to be issued. The game content itself, however, may request selection of the account, in play by the user, for example, for using data saved for each account.

In the present embodiment, on the other hand, in an example where the virtual game card corresponding to content A owned by user A is inserted in certain game device 30, even user A is unable to play content A with other game devices. For example, when content A is inserted in game device 30A, in game device 30S with which user A and user B are associated, not only user B but also user A is unable to play content A. This is the same as a case where, when a game content is stored in a physical game card, in a game device in which the physical game card is not inserted, even an owner of the game card is unable to play the game content.

Content association cancellation program 167 is a program for canceling association between the game content and game device 30 while the game content and game device 30 have already been in association with each other. In other words, content association cancellation program 167 is a program that manages the virtual game card in a state in which it has been removed from specific game device 30 while the virtual game card has already been inserted in specific game device 30. As play of the game content with game device 30 is actually restricted, the virtual game card can be regarded as having been removed from game device 30 in information processing system 100 in the present embodiment.

Game device registration program 168 is a program for registration of game device 30 as game device 30 in which the virtual game card is insertable. In information processing system 100 in the present embodiment, an upper limit number of game devices 30 in which the virtual game card is insertable is determined in advance for each account. Therefore, contribution to unauthorized use can be suppressed. Registration processing is performed by server 10 in response to a registration request from the user by way of example. In the present embodiment, the upper limit number of game devices that can be registered per account is set to two. Already registered game device 30 is referred to as a "registered terminal" below.

Short-distance determination program 169 is a program for determining whether or not at least two game devices 30 are arranged within a prescribed range. In the present embodiment, a condition for registration of second game device 30 includes such a condition that second game device 30 is located within a prescribed distance range from a first registered terminal. The prescribed range is set, for example, to 30 cm, 5 m, 10 m, or the like. In information processing system 100 in the present embodiment, for example, registration as the second registered terminal, of game device 30 owned by another user who lives at a position distant from a user who owns the first registered terminal can thus be suppressed.

System program 161 and/or information processing program 160 include(s) an instruction code for performing processing which will be described later. The "program" that performs processing according to the present embodiment encompasses an instruction code included in system program 161 and/or an instruction code of an application program included in information processing program 160.

Fig. 3 is a schematic diagram showing an exemplary hardware configuration of game device 30 included in information processing system 100 according to the first embodiment. Game device 30 includes a display 31, a communication unit 33, a processor 34, a memory 35, a storage 36, and a bus 37.

Display 31 shows an image generated as a result of information processing performed by processor 34. Display 31 may be composed of a plurality of displays. An operation portion 32 accepts an operation by the user who operates game device 30. Operation portion 32 includes, for example, a push button, a control lever, a touch panel, a mouse, a keyboard, and/or the like.

Components included in game device 30 are connected through bus 37 to communicate data among them. A system program 361 in storage 36 is a program for operation of game device 30 and includes, for example, an OS and firmware.

A game content program 360 in addition to system program 361 is stored in storage 36. Game content program 360 is a program for execution of a downloaded game content and a program downloaded from server 10. Fig. 3 illustrates an example where one game content program 360 is stored. In another aspect, when the user downloads a plurality of game contents to game device 30, a plurality of game content programs 360 for respective downloaded game contents are stored in storage 16. Storage 16 may be expandable. Game device 30 may be an information processing apparatus dedicated for games or a general-purpose information processing apparatus that can execute at least a game.

### [C. Flow from Purchase of Game Device 30A to Registration Thereof]

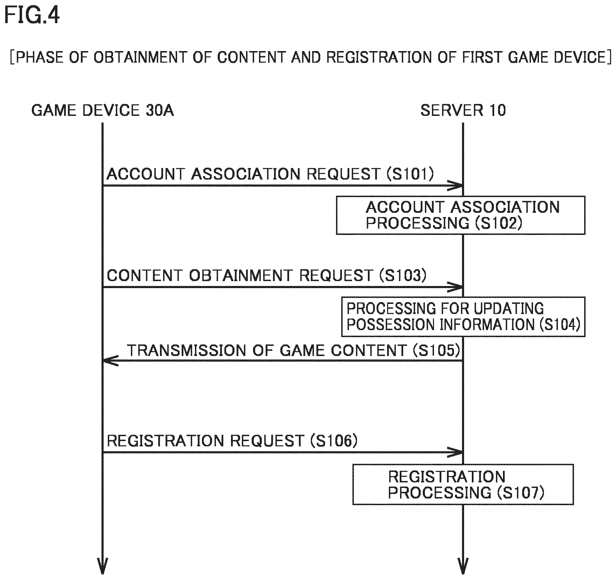

A flow until registration of game device 30A as the registered terminal in which a virtual game card is insertable after user A purchases game device 30A will be described below. Fig. 4 is a timing chart for illustrating a flow from purchase of game device 30A to registration thereof. Fig. 4 shows operations of game device 30A and server 10 on the time-series basis.

After user A purchases game device 30A, user A introduces the user account of the user himself/herself in game device 30A. Specifically, user A inputs the ID, the password, and the like associated with the user account owned by the user himself/herself to game device 30A connected to the Internet. When user A does not own the user account, he/she creates the user account through game device 30A or another terminal. Game device 30A issues an account association request to server 10 based on input from user A (step S101). The account association request refers to processing for requesting association of game device 30A with the account of user A.

Server 10 performs account association processing based on acceptance of the account association request from game device 30A (step S102). Processor 14 of server 10 performs the account association processing by executing account association program 162. Game device 30A introduces the account of user A in response to successful account association processing by server 10.

Game device 30A then issues a content obtainment request to server 10 (step S103). The content obtainment request refers to a request to server 10 to permit the user to own the game content. For example, user A using game device 30A for connection to a game content sales site managed by server 10 to start a procedure for purchase of a game content corresponds to the content obtainment request.

In response to acceptance of the content obtainment request, server 10 performs processing for updating possession information (step S104). Processor 14 of server 10 performs the processing for updating the possession information by executing possession information update program 163. In the processing for updating the possession information, for example, when server 10 confirms appropriate payment of a price by user A, server 10 performs processing for associating the account of user A with the game content purchased by user A. Server 10 manages the game content owned by the user. The user may be able to purchase the game content with a terminal different from game device 30. At this time, a terminal different from game device 30A, a server, or the like may transmit the content obtainment request to server 10. The game content may be offered free of charge, rather than at cost.

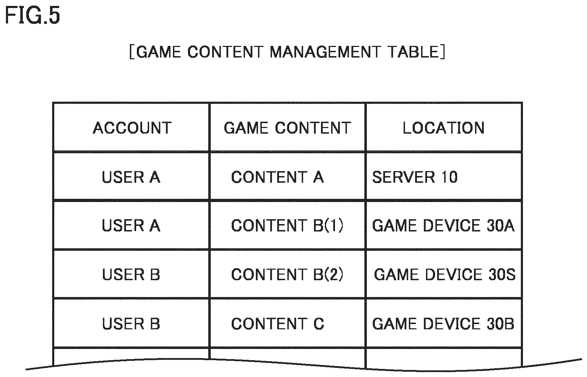

Fig. 5 is a diagram showing an exemplary table to manage game contents owned by the user. The table shown in Fig. 5 is stored in storage 16 of server 10. The table shown in Fig. 5 includes columns showing an account, a game content, and a location of the game content. The table shown in Fig. 5 is a table in which data is added or overwritten as the processing for updating the possession information is performed. By way of example, as the processing for updating the possession information is performed in step S104 in Fig. 4, a row (data) including user A and content A shown in Fig. 5 is generated by server 10.

The column showing the location of the game content shows with which game device 30 the content owned by the user is associated. From another point of view, on the assumption that the content owned by the user in the data format is the physical game card, the column shows in which game device 30 the content has been inserted. The column showing the location of the game content is configured to be rewritten in content association processing or the like which will be described later. By way of example, immediately after purchase of content A by user A, the location of content A is stored as "server 10." In other words, immediately after generation of the row (data), "server 10" is inputted as the location of content A by default. In a state immediately after purchase, the virtual game card corresponding to content A is regarded as being in a state in which it is inserted in none of game devices 30 and "server 10" is inputted as the location of content A. This denotation "server 10" as the location of content A is one example indicating a state in which the content is inserted in none of game devices 30, and the denotation may be, for example, "NULL" or the like.

In an example where the user owns a plurality of game contents, the location may be set for each game content. For example, as shown in Fig. 5, the location of a content B(2) owned by user B may be set to game device 30S and the location of a content C may be set to game device 30B. In this case, content B(2) can be played with game device 30S and content C can be played with game device 30B.

As shown in Fig. 5, each of user A and user B can also purchase the same content B. Even substantially the same content is managed as being distinguished as a content B(1) and content B(2). User A may be allowed to purchase a plurality of contents B. At this time, the plurality of contents B owned by user A may be distinguished from each other and the locations thereof may independently be managed.

Referring back to Fig. 4, server 10 transmits game content program 360 for execution of content A selected by user A to game device 30A based on appropriately performed processing for updating the possession information (step S105). Specifically, server 10 allows content A which is the game content desired by user A to be downloaded to game device 30A. Server 10 may allow the game content to be downloaded to game device 30A only when game device 30 issues a download request separately from the content obtainment request. Downloading of the game content does not have to be started until next registration processing is completed.

The registration processing will be described in succession. In order to execute the downloaded game content with game device 30A, user A inputs to game device 30A, an instruction to register game device 30A as the game device in which the virtual game card is insertable. Whether or not game device 30A is a terminal that has already been registered is stored in game device 30A itself, and when game device 30A is not the registered terminal, it issues a registration request to server 10 (step S 106). Whether or not game device 30A is the already registered terminal does not have to be stored in game device 30A.

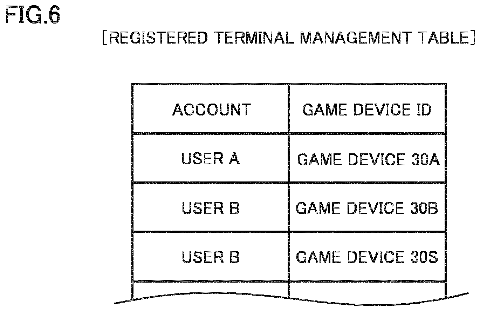

Server 10 performs the registration processing in response to acceptance of the registration request from game device 30A (step S107). Processor 14 of server 10 performs the registration processing by executing game device registration program 168. In server 10, game device 30A associated with the account of user A is thus stored as the registered terminal of user A, in a table shown in Fig. 6. Server 10 may perform the registration processing not based on the registration request. For example, server 10 may check whether or not game device 30A is managed as the registered terminal of user A in succession to the processing for updating the possession information, and when game device 30A is not the registered terminal, server 10 may perform the registration processing.

Fig. 6 shows an exemplary table for management of the registered terminal. The table shown in Fig. 6 is stored in storage 16 of server 10, similarly to the table shown in Fig. 5. The table shown in Fig. 6 includes columns showing an account and a game device ID. As the registration processing shown in step S107 in Fig. 4 is performed, a row (data) including user A and game device 30A shown in Fig. 6 is generated by server 10. In the example in Fig. 6, game device 30A is the first registered terminal of user A.

Server 10 can thus manage "game device 30A" as the registered terminal of user A. Information processing system 100 in the present embodiment is configured such that two game devices at the maximum per account can be registered. In the example in Fig. 6, "game device 30B" and "game device 30S" have already been registered as the registered terminals of user B. If user B issues the registration request for registration of third game device 30, server 10 gives a notification that the number of registered terminals of user B has reached the upper limit. User B who has received the notification may remove one of game devices 30B and 30S from the registered terminals. Server 10 thus manages the user and the registered terminal by updating the table shown in Fig. 6.

### [D. Flow of Registration of Second Game Device 30S]

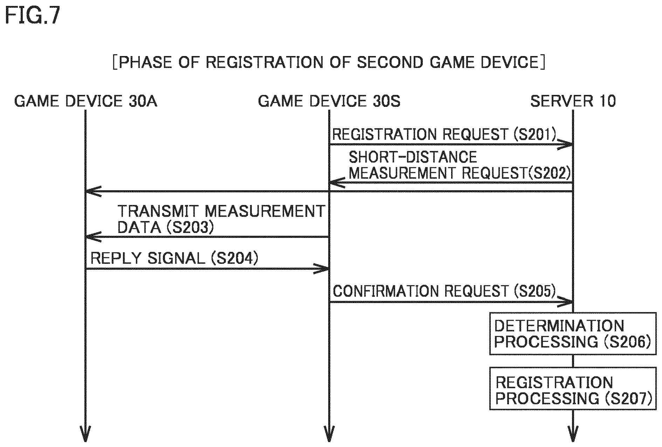

In succession, an example in which user A registers game device 30S as the registered terminal in addition to game device 30A will be described. As described above, in information processing system 100 in the present embodiment, two game devices 30 per account can be registered. In registration of the second game device, first game device 30A and second game device 30S being located within a prescribed distance range is defined as a condition. Fig. 7 is a timing chart for illustrating a flow of registration of second game device 30S.

Before step S201 is performed in Fig. 7, the account of user A is introduced in both of game device 30A and game device 30S. Game device 30S issues the registration request to server 10 while the account of user A is selected (step S201). Server 10 confirms that the number of registered terminals of user A has not reached the upper limit and that game device 30A is the registered terminal of user A. Therefore, server 10 issues a short-distance measurement request to game device 30A which is the first registered terminal and game device 30S. The short-distance measurement request is a request to have game devices 30A and 30S perform processing for measuring a distance between game device 30S that has issued the registration request and game device 30A registered as the first registered terminal.

Game device 30A makes transition to a state in which it can receive measurement data from another terminal based on acceptance of the short-distance measurement request. Game device 30S transmits measurement data to game device 30A based on acceptance of the short-distance measurement request (step S203). For example, transmission and reception of a signal by infrared sensors or wireless communication devices provided in game devices 30 is employed as a method of transmission of measurement data. Game device 30A transmits a reply signal based on reception of the measurement data (step S204).

Game device 30S measures a period required from a time point of start of transmission of the measurement data until completion of reception of the reply signal from game device 30A. Game device 30S issues a confirmation request to server 10 (step S205). In step S205, game device 30S issues the confirmation request and transmits information indicating the required period to server 10. Server 10 performs determination processing for determining whether or not the required period is shorter than a threshold value (step S206). Processor 14 of server 10 performs the determination processing by executing short-distance determination program 169.

In the determination processing, when the required period is shorter than the threshold value, server 10 determines that game device 30A and game device 30S are located at a distance short to some extent for registration of game device 30S. In other words, in the present embodiment, determination as to whether or not game devices 30 are within a prescribed range does not refer to determination based on strict measurement of the distance to determine whether or not the game devices are at a certain distance from each other but refers to determination that the game devices are expected to be within a certain distance range based on the period required for transmission and reception of the signal. When it is determined in the determination processing that the game devices are within the certain distance range, server 10 performs the registration processing for registering game device 30S (step S207). Server 10 thus generates a row (data) including user A and game device 30S in the table shown in Fig. 6. In other words, game device 30S is registered as the registered terminal of user A. As shown in Fig. 6, game device 30S has already been registered also as the registered terminal of user B. In other words, one game device 30 may be registered as the registered terminal of a plurality of accounts.

### [E. Flow of Execution of Content A]

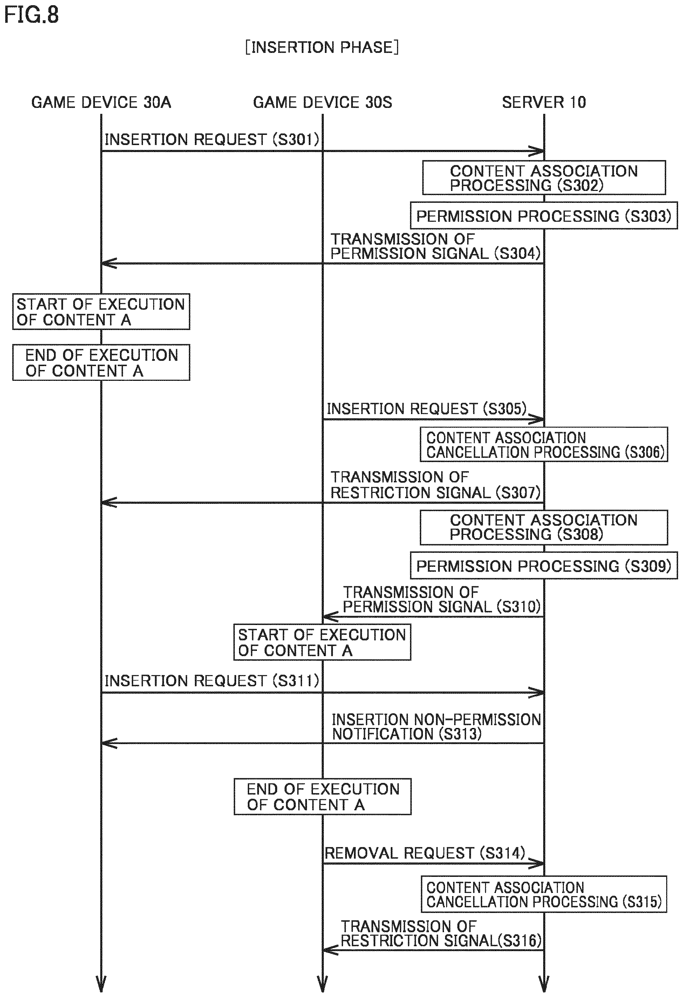

In steps below, processing for user A to play obtained content A will be described. Fig. 8 illustrates processing for handling the game content owned by the user as data, similarly to the physical game card. Fig. 8 is a timing chart for illustrating a flow of execution of content A.

In an example shown in Fig. 8, the game content program corresponding to content A has already been downloaded to game device 30A. In information processing system 100 in the present embodiment, however, game device 30A is configured not to be able to execute content A unless the location of content A is stored as "game device 30A" in server 10. In other words, unless content A is associated with game device 30A in the table shown in Fig. 5, game device 30A is unable to execute content A.

In Fig. 8, at a time point when step S301 is performed, both of game device 30A and game device 30S are set as the registered terminals of user A. "Server 10" is stored in server 10, as the location of content A owned by user A.

Game device 30A issues an insertion request based on an instruction from user A (step S301). The insertion request is a request for virtual insertion in game device 30A, of the virtual game card designated by the user. In the example in Fig. 8, user A requests insertion of the virtual game card of content A in game device 30A. At this time, log-in by user A to game device 30A may be required.

Server 10 determines whether or not content A is virtually insertable in game device 30A based on acceptance of the insertion request. In the first embodiment, when content A has not yet been inserted in another game device 30 or when content A has already been inserted in another game device 30 but can be removable from that game device 30, server 10 determines content A as being insertable.

When server 10 determines that content A is virtually insertable in game device 30A, it performs the content association processing (step S302). Processor 14 of server 10 performs the content association processing by executing content association program 164. Specifically, server 10 updates the location of content A owned by user A shown in Fig. 5 from "server 10" to "game device 30A." Game device 30A is associated with content A owned by user A.

Server 10 performs permission processing for permitting game device 30A to execute content A based on appropriate end of the content association processing (step S303). In the permission processing, a permission signal for permission of execution of content A is generated. Processor 14 of server 10 performs the permission processing by executing permission program 165.

Server 10 transmits the permission signal to permit game device 30A to execute content A (step S304). Game device 30A makes transition to a state in which it can execute content A, based on reception of the permission signal. At this time, a message indicating successful insertion may be shown on display 31. Since content A has been associated with game device 30A, content A cannot be played with game device 30 other than game device 30A. In other words, server 10 permits play of content A with game device 30A but restricts play thereof with game device 30 other than game device 30A. Game device 30A does not have to require log-in by the user in play of content A. In other words, in play of the game content corresponding to the inserted virtual game card, the game device does not have to issue a request for log-in by the user, for example, to impose such restriction that only the owner of the game content is permitted to play the game content. The game content itself, however, may request log-in by the user for referring to saved data of the user who plays the game content.

Game device 30A can start execution of content A after it receives the permission signal. In other words, user A and another user can play content A with game device 30A. In the present embodiment, even when game device 30A is off-line, it can continue execution of content A because the game content program corresponding to content A is stored in game device 30A and game device 30A has already received the permission signal.

An example in which game device 30S to which user A has logged in issues the insertion request for insertion of content A in game device 30S based on an instruction from user A (step S305) will now be described. Server 10 determines whether or not content A is virtually insertable in game device 30S based on acceptance of the insertion request.

Server 10 that has accepted the insertion request in step S305 determines that the location of content A owned by user A is not "server 10" but "game device 30A." Server 10 checks whether or not content A is removable from game device 30A. By way of example, the server checks whether or not content A is being executed in game device 30A. In the example in Fig. 8, server 10 confirms that content A is not being executed in game device 30A.

When content A is not being executed, as shown in Fig. 8, server 10 determines that content A is virtually insertable in game device 30S and performs the content association cancellation processing (step S306). Processor 14 of server 10 performs the content association cancellation processing by executing content association cancellation program 167. Specifically, server 10 updates the location of content A owned by user A shown in Fig. 5 from "game device 30A" to "server 10." Server 10 generates a restriction signal to restrict execution of content A with game device 30A in the content association cancellation processing.

Server 10 transmits a restriction signal to game device 30A based on end of the content association cancellation processing (step S307). Game device 30A makes transition from the state in which content A is executable to a state in which content A is not executable, based on reception of the restriction signal. Server 10 may initially transmit the restriction signal to game device 30A, confirm that game device 30A is in the state in which content A is not executable, and thereafter perform the content association cancellation processing.

Server 10 performs the content association processing based on transmission of the restriction signal and confirmation that content A is not executable with game device 30A (step S308). Server 10 updates the location of content A owned by user A shown in Fig. 5 from "server 10" to "game device 30S." In another example, the location may directly be updated from game device 30A to game device 30S without update of the location once to server 10. Thereafter, server 10 performs the permission processing for permitting game device 30S to execute content A (step S309).

Server 10 transmits the permission signal to permit game device 30S to execute content A (step S310). Game device 30S makes transition to the state in which content A is executable, based on reception of the permission signal.

As shown in Fig. 8, game device 30S can start execution of content A after it receives the permission signal. Not only user A but any user can play content A with game device 30S. By way of example, user A may log out of game device 30S and user B may log in to game device 30S to play content A.

In succession, an example in which game device 30A is operated to issue the insertion request to server 10 while content A is being executed with game device 30S (step S311) will be described. At the time point of acceptance of the insertion request in step S311, server 10 accesses game device 30S and confirms that game device 30S is executing content A. In the first embodiment, the content being executed in game device 30 is assumed as not being removable. Therefore, server 10 transmits to game device 30A, an insertion non-permission notification indicating that content A is not insertable in game device 30A (step S313). Game device 30A may show on display 31 that the virtual game card is not insertable. A reason therefor, namely, the virtual game card not being insertable because of execution of content A with game device 30S, may also be shown. Content A can be played also thereafter with game device 30S. Server 10 may perform the content association cancellation processing for cancellation of association between game device 30S and content A after execution of content A with game device 30S ends, based on reception of the insertion request from another game device while content A is being executed with game device 30S. In this case, game device 30A may be notified that the content association cancellation processing has been performed.

Game device 30S can issue a removal request to server 10 based on an instruction from user A (step S314). The removal request is a request for virtual removal of the virtually inserted virtual game card. Server 10 performs the content association cancellation processing based on acceptance of the removal request (step S315). Server 10 updates the location of content A owned by user A shown in Fig. 5 from "game device 30S" to "server 10." By thus setting the location of content A to server 10, when user A desires play of content A next time, content A can virtually be inserted smoothly to game device 30A or game device 30S.

Server 10 transmits the restriction signal to game device 30S based on end of the content association cancellation processing in step S315 (step S316). Game device 30S makes transition from the state in which content A is executable to the state in which content A is not executable, based on reception of the restriction signal.

Thus, in the present embodiment, game device 30 is configured such that the game content owned by the user is associated therewith and it can execute the game content based on reception of the permission signal from server 10. The game device or server 10 associated with the game content falls under information corresponding to the "location" in the physical game card. Any user can play the game content with game device 30 corresponding to the location, and no user can play the game content with other game devices 30. When the location is server 10, that is, when the virtual game card has been inserted in none of game devices 30, the game content can be played with no game device 30. When the location of the virtual game card is server 10, the virtual game card can be inserted in any game device 30 which is the registered terminal. Thus, information processing system 100 can handle the game content managed in the data format as if the game content were stored in a physical storage device. The user can know game device 30 with which the desired game content can be played, simply by checking the location of the game content managed by server 10.

### [F. Display Screen]

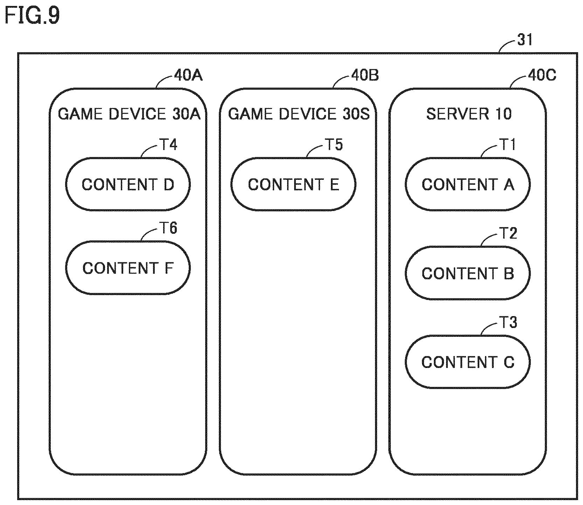

Fig. 9 is a diagram showing display 31 on which an object representing a content owned by user A is shown. In an example in Fig. 9, user A owns contents A to F as data. Fig. 9 shows display 31 of game device 30A, on which locations of contents A to F owned by user A are shown.

More specifically, a region 40A, a region 40B, and a region 40C representing "game device 30A," "game device 30S," and "server 10," respectively, are shown on display 31. Game device 30A and game device 30S are the registered terminals of user A. Objects T1, T2, T3, T4, T5, and T6 representing respective contents A, B, C, D, E, and F owned by user A are shown on display 31. Objects T1 to T6 may collectively simply be referred to as an "object T" below. Region 40A, region 40B, and region 40C may collectively simply be referred to as a "region 40." Each of objects T is arranged in the inside of region 40 corresponding to the location. According to such a screen configuration, the user can intuitively understand the location of the content. The user can intuitively understand with which game device 30 which content can be played. Such a display screen may be shown on a terminal other than game device 30A, such as a smartphone. Such a display screen may be shown as the user uses the smartphone to start up an application or to log in to a site of a game company or the like.

This display screen may be used to allow insertion or removal of the virtual game card. By way of example, by selection of each object T, in or from which game device 30 the virtual game card of the content corresponding to object T is to be inserted or removed may be controllable. By way of example, the virtual game card may be inserted or removed as user A drags certain object T to at least one of regions 40 over display 31 implemented by a touch screen.

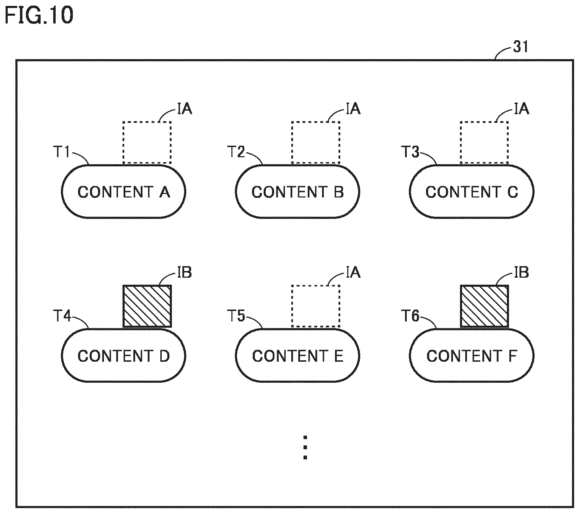

Fig. 10 is a diagram showing another exemplary display 31 on which an object representing a content owned by user A is shown. Display 31 in an example in Fig. 10 is a display of game device 30A. As shown in Fig. 10, each object T is accompanied by an icon I. Icon I may be superimposed on each object T or may be arranged near each object T. There are two types of icons I. Icons IB provided to objects T4 and T6 can visually be distinguished from icons IA provided to objects T1, 2, 3, and 5. For example, icon IA is shown as being partially transparent, whereas icon IB is shown as not being transparent. Icon I is a collective denotation of icon IA and icon IB. There may be three or more types of icons I.

Icon IB indicates that the virtual game card of the content corresponding to object T accompanied by the icon has been inserted in game device 30 that includes display 31 (or outputs the display screen to display 31). Specifically, the example in Fig. 10 shows that the virtual game cards of content D and content F have been inserted in game device 30A and these contents can be played with game device 30A. On the other hand, icon IA indicates that the virtual game card of the content corresponding to object T accompanied thereby has not been inserted in game device 30A.

Thus, in the example shown in Fig. 10, which content of the contents owned by user A can currently be played with game device 30A can readily be known. If the contents owned by user A are shown not on game device 30A but on game device 30S, the type of icon I provided to each object T may be different even though displayed object T is the same. Specifically, icon IB is provided to object T corresponding to the content the virtual game card of which has been inserted in game device 30S, and icon IA is provided to object T corresponding to the content the virtual game card of which has not been inserted.

In the example in Fig. 10, whether the virtual game card not inserted in game device 30A has been inserted in another game device 30 or inserted in no game device 30 is not shown in a distinguishable manner. The user who is using game device 30A is estimated to desire to initially know which content can be played with game device 30A. Display of the location of the content which the user is unable to play, however, may lead to overload of information. Therefore, by providing representation shown in Fig. 10, the user who uses game device 30A can readily know which content can currently be played and which content cannot currently be played with game device 30A. The location of object T1 may be shown, for example, by movement of a cursor over object T1 by the user or selection of object T1 by the user. In the example shown in Fig. 10, at which location other than game device 30A (for example, in which game device 30 or server) each content is located may be shown in a distinguishable manner.

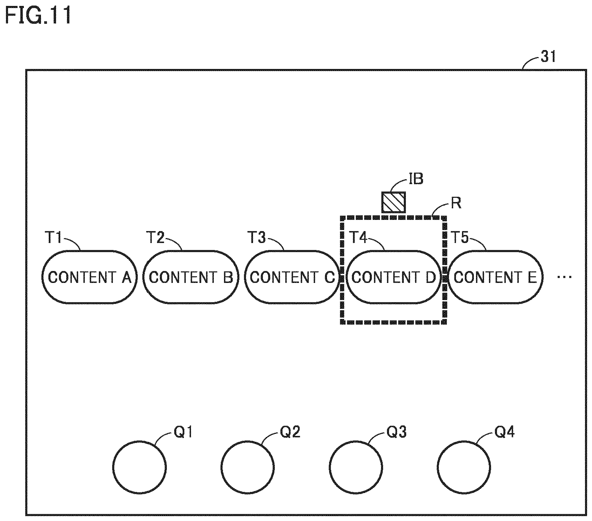

Fig. 11 is a first diagram showing display 31 on which a menu of game device 30A is shown. In the menu, object T corresponding to each content is shown. The user can start play of the corresponding content by selecting each object T from the menu by way of example. A manner of representation of object T may be the same as or different from that of object T shown in Fig. 10. In the present embodiment, the contents corresponding to objects T shown as being aligned in the menu include not only the contents that can be played with game device 30A but also contents that have been played with game device 30A even though they cannot be played at a time point of display of the menu. Which content is shown in the menu is not particularly limited. Sub menu objects Q1 to Q4 for performing various functions or making setting of game device 30A are arranged below objects T. By way of example, when the user selects sub menu object Q4, contents owned by each user as shown in Fig. 9 or 10 are shown. When the user selects sub menu object Q4, a user (account) selection screen for selection of the content owned by which account among accounts associated with game device 30A may then be shown.

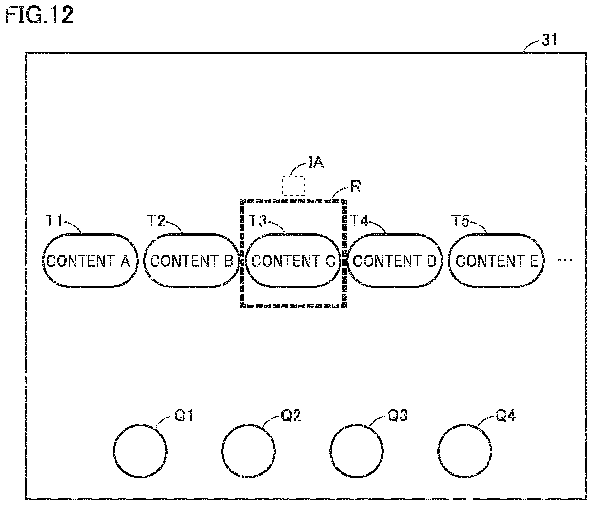

In the example shown in Fig. 11, the user can control a position of a cursor R. In the example in Fig. 11, cursor R is shown at a position of object T4 corresponding to content D. At this time, icon IB is shown in the vicinity of cursor R and object T4 so as to correspond to object T4. Icon IB is an icon indicating that the virtual game card corresponding to content D has been inserted in game device 30A. Icon IB in Fig. 11 and icon IA in Fig. 12 which will be described later may be in a manner of representation the same as or different from that of icons IA and IB shown in Fig. 10. When the user performs an enter operation in this state, content D is executed. In an example where the physical game card can be inserted in game device 30A, icon IB may be employed as the icon indicating that the physical game card corresponding to a certain content has been inserted. In other words, regardless of whether or not the game card is physical or virtual, icon IB may be shown when a game card of a certain content is inserted.

On the other hand, in the example shown in Fig. 12, cursor R has been moved to a position of object T3 by being operated by the user. Fig. 12 is a second diagram showing display 31 on which the menu of game device 30A is shown. Icon IA is shown as corresponding to object T3. Icon IA is an icon indicating that the virtual game card corresponding to content C has not been inserted in game device 30A. In other words, in the example shown in Fig. 12, the user is unable to play content C. When the user performs the enter operation in this state, game device 30A may show a message indicating that the virtual game card has not been inserted. Game device 30A may perform processing for removing the virtual game card corresponding to content C, for example, from another game device 30 and inserting the same in game device 30A.

By thus showing whether or not the virtual game card corresponding to each content has been inserted in the menu where the content to be played is selectable, the user can readily know whether or not each content can currently be played with game device 30.

In the example above, icon I indicates whether or not the virtual game card of the content corresponding to the position of cursor R has been inserted. Whether or not the virtual game cards of all contents have been inserted, however, may be shown regardless of the position of cursor R. When the game content program for execution of the content is not stored in game device 30, regardless of whether or not the virtual game card corresponding to the content has been inserted, an icon IC different in type indicating that downloading of the game content program is required may be shown instead of icon IA and icon IB. Icon IC may be shown together with icon IA or icon IB.

The menu shown in Fig. 11 or 12 is shown when game device 30 is substantially started up by way of example. In the present embodiment, such a menu is shown without selection of the user who should log in. Therefore, for example, the menu of game device 30S with which user A and user B are associated includes the content owned by user A and the content owned by user B. User B or another user who is not user A nor user B can play the content owned by user A by entering the content in the menu.

### <Second Embodiment>

In the first embodiment, exemplary information processing system 100 configured such that a virtual game card owned by user A is not be insertable in game device 30 other than the registered terminal of user A is described. In a second embodiment, an example in which a user's own virtual game card is temporarily insertable also in game device 30 other than the registered terminal of the user himself/herself among users belonging to the same group (for example, a family) will be described. Description of features the same as those in the first embodiment will not be repeated in the second embodiment.

### [G. Permission for Temporary Use]

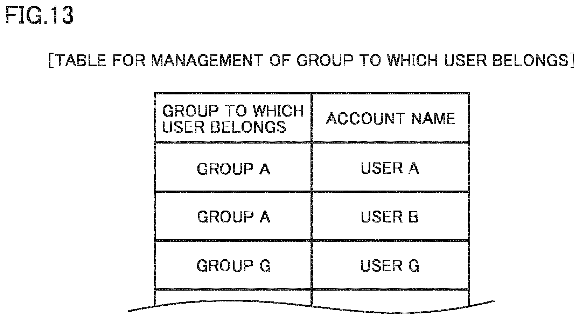

In the second embodiment, server 10 manages a group to which the user belongs. A table for management of the group to which the user belongs is stored in storage 16 of server 10, in addition to the tables shown in Figs. 5 and 6. Fig. 13 is a diagram showing a table for management of the group to which the user belongs.

As shown in Fig. 13, user A and user B are stored in association in a "group A" to which the users belong. Group A is, for example, a group to which only the family to which users A and B belong can belong. A "group G" to which the users belong is a group to which a user G belongs, and user G is stored in association therein. User G belongs to group G different from group A (the family to which users A and B belong). In the second embodiment, the user is managed by server 10 in such a manner that one user can belong to only a single group.

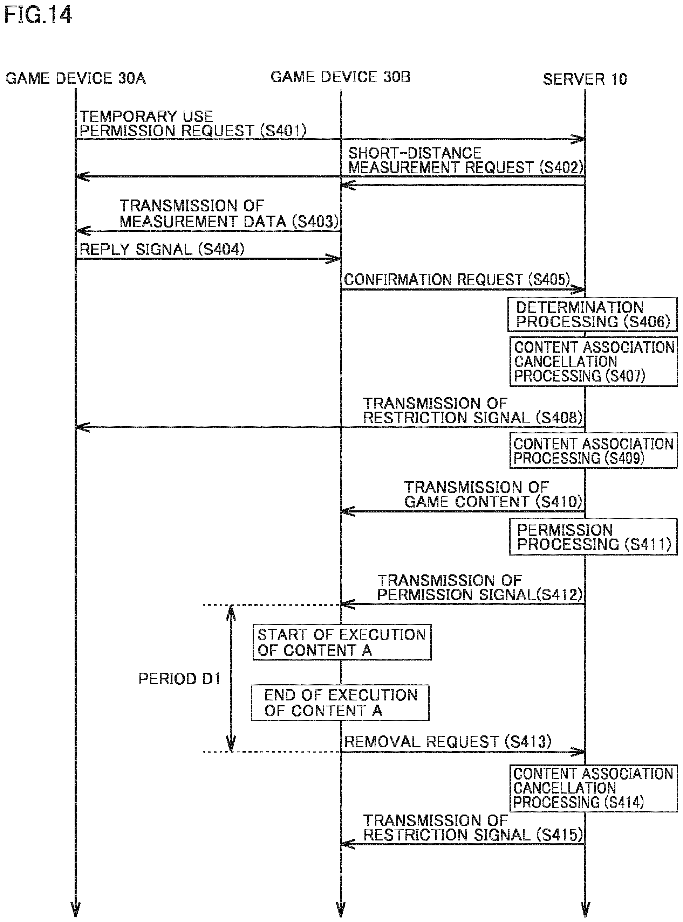

Fig. 14 is a timing chart for illustrating a flow of temporary use of a content. By way of example, in Fig. 14, when step S401 is performed, user A logs in to game device 30A and user B logs in to game device 30B. In Fig. 14, when step S401 is performed, the virtual game card of content A has already been inserted in game device 30A.

Game device 30A issues a temporary use permission request to server 10 based on input from user A (step S401). The temporary use permission request refers to a request to server 10, for permission for temporary use of the virtual game card owned by the user, by another user (more specifically, the registered terminal of another user in the present embodiment) belonging to the same group. In the example in Fig. 14, user A requests permission for temporary use of content A owned by user A, by game device 30B which is the registered terminal of user B. Only another user rather than the registered terminal of another user may be selected. At this time, the user who is granted permission for temporary use may be able to select to which registered terminal of another user permission for temporary use is to be granted.

Server 10 issues the short-distance measurement request to game device 30A and game device 30B based on acceptance of the temporary use permission request (step S402). The short-distance measurement request in step S402 is a request for checking as to whether or not game device 30B which is the registered terminal of user B belonging to group A is present within a prescribed range from game device 30A that has issued the temporary use permission request. Game device 30A makes transition to a measurement data reception mode based on acceptance of the short-distance measurement request.

Game device 30B transmits measurement data to game device 30A (step S403). Game device 30A transmits a reply signal based on reception of the measurement data (step S404). Game device 30B measures a period required from a time point of start of transmission of the measurement data until completion of reception of the reply signal from game device 30A.

Game device 30B issues a confirmation request to server 10 (step S405). In step S405, game device 30B issues the confirmation request and transmits information indicating the required period to server 10. Server 10 performs the determination processing for determining whether or not the received required period is shorter than the threshold value (step S406). When server 10 determines in the determination processing that game device 30A and game device 30B are located within the prescribed range, it performs the content association cancellation processing (step S407). In step S407, association between game device 30A and content A is canceled. Specifically, the virtual game card of content A inserted in game device 30A is removed from game device 30A.

Server 10 transmits the restriction signal to game device 30A (step S408). Game device 30A makes transition from the state in which content A is executable to the state in which content A is not executable, based on reception of the restriction signal. In succession, server 10 performs the content association processing for associating content A owned by user A with game device 30B (step S409). At this time, content A owned by user A, game device 30B, and user B are associated with one another. A user other than the user belonging to group A may also be able to play content A with game device 30B. In other words, not only the account of the user belonging to the same group to which user A belongs but also an account of a user belonging to another group or a user belonging to no group may be introduced in game device 30B, and such a user may also be able to play content A with game device 30B.

When game content program 360 for execution of content A is not stored in game device 30B mainly used by user B, game content program 360 is transmitted to game device 30B (step S410). In other words, server 10 has content A downloaded to game device 30B.

With end of transmission of data for execution of content A, server 10 performs the permission processing (step S411) and transmits the permission signal to game device 30B (step S412). Game device 30B makes transition to the state in which content A is executable, and starts execution of content A in response to input from the user. In other words, for example, user B can play content A owned by user A with game device 30B. The order of transmission of game content program 360 and transmission of the permission signal is not particularly limited.

In the present embodiment, when play of a content owned by a certain user with the registered terminal of another user belonging to the group to which that user belongs is thus permitted, certain restriction is imposed on the play. Specifically, use of the content is restricted to temporary use. Restriction in terms of time is imposed by way of example of temporary use. In the example in Fig. 14, when a period D1 has elapsed since reception of the permission signal for content A, game device 30B issues the removal request regardless of operation by user B (step S413) and the virtual game card of content A is removed. Period D1 is set, for example, to such a period as one day, one week, or one month. Other examples of restriction in terms of time include a period from start of play of content A, a duration of play of content A, and the like. Other examples of restriction in terms of temporary use include restriction in accordance with the number of times of play of content A, the number of times of saving of content A, and a status of progress of content A.

Server 10 performs the content association cancellation processing for canceling association between game device 30B and content A based on acceptance of the removal request (step S414) and transmits the restriction signal to game device 30B (step S415). Game device 30B is thus in the state in which it is unable to execute content A owned by user A. Thus, in the second embodiment, game device 30B which is not the registered terminal of user A can be permitted to temporarily use content A on condition that user A and user B belong to the same group A and that game device 30B is within the prescribed range from game device 30A.

In the first embodiment, in registration of second game device 30 of a certain user as the registered terminal, short-distance checking as to whether the second game device is located at a short distance from the first registered terminal is performed. Thereafter, however, the content can be inserted or removed between the registered terminals without short-distance checking. In the second embodiment, on the other hand, each time certain game device 30 is permitted to temporarily use the content, short-distance checking should be performed. Specifically, in permitting temporary use of the content owned by user A by the registered terminal of another user belonging to the group to which user A belongs, short-distance checking for checking the distance between the registered terminal of user A (insertion of the content to temporarily be used in that registered terminal may or may not be required) and the registered terminal of another user is performed each time. Thus, in permitting temporary use of the content owned by user A also by game device 30 which is not the registered terminal of user A, unauthorized use can be suppressed.

Game device 30B may spontaneously enter, with expiration of period D1, a state in which it is unable to execute content A without reception of the restriction signal from server 10. Thus, even when game device 30B is off-line at the time of expiration of period D 1, use of content A with game device 30B can appropriately be terminated. Server 10 may spontaneously perform the content association cancellation processing without receiving the removal request from game device 30B. Thus, when period D1 expires, user A who is the owner of content A can play again content A with game device 30A. When game device 30B goes on line thereafter, server 10 may confirm that play of content A with game device 30B has already been restricted. In another example, play of content A with game device 30B may continue also after expiration of period D1 until game device 30B goes on line. At this time, user A may not be permitted to play content A with game device 30A or the like. Game device 30B spontaneously quits use of content A at the time of expiration of period D1, whereas server 10 does not have to spontaneously perform the content association cancellation processing. In this case, the content association cancellation processing is not performed until game device 30B goes on line and no game device 30 may be permitted to play content A.

### <Third Embodiment>

In the first embodiment, an example in which game device 30 is unable to execute content A unless the virtual game card of content A is inserted in game device 30 is described. In a third embodiment, an example in which, even when the virtual game card of content A is not inserted in game device 30, the owner of content A is permitted to play content A with game device 30 in which content A is not inserted will be described. Description of features the same as those in the first embodiment will not be repeated in the third embodiment.

### [H. Account-Based Use]

The first embodiment explains that the user is unable to play the game content unless the virtual game card is inserted in game device 30. By permitting the owner of content A to play the game content even when the virtual game card has not been inserted in game device 30, however, convenience may be improved while use of the game content to an excessive extent is suppressed. Thus, permission of play of the content by the user who owns the game content is referred to as "account-based use." "Account-based use" namely means execution of the game content on the basis of the account of the user.

In the account-based use, user A who owns content A can play content A with another game device 30S in which the account of user A has been introduced, even when the virtual game card of content A is inserted in game device 30A in which the account of user A has been introduced. Since use is strictly account-based use, a user other than user A is not permitted to play content A with game device 30S.

By way of example, for account-based use, game device 30S is required to be on-line at least at the time of start of the game. Server 10 may confirm that user A owns content A based on game device 30S issuing a request for account-based use, and then may permit play of content A with game device 30S. At this time, game device 30A also being on-line and content A not being played with game device 30A may be set as a condition for play of content A by game device 30S on the basis of the account. Game device 30A being on-line, however, does not have to be set as the condition. Alternatively, whether or not content A is being played with game device 30A does not have to be set as the condition. Alternatively, while content A is being used on the basis of the account, play of content A with game device 30 in which the virtual game card of content A has been inserted may not be permitted.

By way of example, user A not having logged in to another game device 30 may be set as the condition for play of content A with game device 30S by user A on the basis of the account.

When temporary use of content A by another user (or the registered terminal of another user) in the group to which user A belongs is permitted, play of content A on the basis of the account may not be permitted.

The user may be allowed to select whether or not to permit account-based use of the content. Account-based use may increase scenes where a content is executable. Depending on the user, on the other hand, it may be difficult to know which user can play which content with which game device 30. Therefore, while management of a terminal with which the content can be used on the basis of the virtual game card in the first or second embodiment may be defined as the basis, permission or prohibition of account-based use may freely be set by the user. In another embodiment, use of the content based on one of the former may be selected. Alternatively, in another embodiment, use based on both or one of the former may be selected for each content.

### [I. Modification]

Other forms which are partial modifications of the embodiments described above will be described below.

The processor of server 10 and game device 30 may be composed of a single chip or a plurality of chips.

Furthermore, the processor and associated processing circuitry may be composed of a plurality of computers connected to one another through a wire or wirelessly over a local area network or a wireless network. The processor and the associated processing circuitry may be implemented by such a cloud computer as performing remote computation based on input data and outputting a result of computation to another device located at a distant location.

Game devices 30A, 30B, and 30S connected to server 10 may be game devices of the same type or different types. At least one of them may be a general-purpose PC or a smartphone.

The example described above explains, as an example in which a single user owns a plurality of game devices, that at least one game device is shared by a plurality of users including that single user (a plurality of user accounts are introduced in at least one game device). Even an example in which only the user account of the same one user is introduced in all of the plurality of game devices is applicable to the present example.

In the example described above, each account introduced in game device 30 is an account the information on which is managed by server 10. An account not managed by server 10, however, may be introduced in game device 30. There may be an account that is managed by server 10 but not associated with game device 30. The account may be associated with at least one of game devices 30 after a game content is purchased.

In the example described above, the account to be logged in is selected at the time of start of play of the game content. Depending on the game content, however, log-in does not have to be required or log-in may be required at prescribed timing during execution of the game. For example, selection of the account to be logged in may be requested at the time of start-up of game device 30. At this time, contents in accordance with the logged-in account may be shown on the display screen shown after game device 30 is started up.

In the example described above, though description is given with reference to the game card as a virtual medium, the type of the medium is not limited.

The example above explains that any account is able to play the content with game device 30 in which the virtual game card has been inserted. This feature permits a case where at least one account is unable to play the content under another condition different from the condition of the location of the virtual game card. By way of example, when age limit is set for a content, an underage account is unable to play the content with game device 30 even when the virtual game card has been inserted in game device 30.

In the example described above, a downloaded game content is insertable in game device 30 as the virtual game card, however, there may be a game content not handled as the virtual game card. By way of example, a game content downloaded for free, a game content that can be played in a subscription service, a trial-version game content, or the like does not have to be handled as the virtual game card. At this time, the user should only download the game content to each game device 30 with which the user desires to play the game content.

In the example described above, the content handled as the virtual game card may include what is called an additional content. The additional content refers to a game content that adds a story, a stage, a character, or the like to a main game content by way of example. When a certain user who already owns the main game content (that is, who owns the virtual game card corresponding to the main game content) purchases an additional content, the user may be able to obtain one virtual game card, insertion of which allows play of the main game content and the additional content. At this time, the obtained virtual game card may be shown in such a manner as identifying the virtual game card as including the additional content in addition to the main content. When the user who does not own the main game content purchases only an additional content, the user is assumed to own a virtual game card corresponding only to the additional content. At this time, when both of the virtual game card corresponding to the main game content and the virtual game card corresponding to the additional content are inserted in certain game device 30, the additional content may be played with that game device 30. At this time, the owner of the virtual game card corresponding to the main game content may be different from the owner of the virtual game card corresponding to the additional content, or a user who plays the additional content with that game device 30 may be yet another user.

When there are a plurality of additional contents including a first version and a second version and when a certain user owns the plurality of additional contents, the virtual game cards may be handled as a single game card in which the plurality of owned additional contents are integrated. Specifically, regardless of whether or not the certain user owns the main game content or regardless of whether or not the user owns the plurality of additional contents corresponding to the main game content, the virtual game cards relating to the game contents owned by the user may be handled as a single virtual game card. In another example, virtual game cards corresponding to the main game content and a plurality of additional contents, respectively, may be managed separately from one another.

In the example described above, though downloading of the game content or insertion or removal of the virtual game card is performed with server 10 being interposed, it may be performed between game devices 30 or by another information processing apparatus. A specific control method with server 10 being interposed is not limited to the examples described above either. For example, when certain game device 30 inserts a virtual game card inserted in another game device 30 into that certain game device 30 itself, certain game device 30 may instruct another game device 30 to remove the virtual game card, another game device 30 may transmit the removal request to the server and check whether or not removal is successful, another game device 30 may transmit successful removal to the certain game device, and the certain game device may transmit the insertion request to the server.

In the example described above, though the content cancellation processing and the content association processing are performed separately from each other, they may be performed as integrated processing. Regarding other processing, the examples described above are merely by way of example, and each type of processing may be performed as being integrated or being split as appropriate.

The example in Fig. 4 described above explains that the content obtainment request is issued based on payment of the price from user A to the game company or the like. The content obtainment request, however, may be issued based on payment of the price from another user who is not user A to the game company. For example, the content may be associated with user A as a property of user A, based on payment of the price from another user in friendship or parental relation with user A to the game company.

The example described above explains that "server 10" is inputted by default as the location of the content immediately after purchase of the content by the user. In one aspect, at least one of the registered terminals may be inputted by default as the "location of the content" immediately after purchase of the content. Alternatively, when the content is purchased with game device 30 and game device 30A is the registered terminal, game device 30A used for purchase of the content may be inputted by default as the "location of the content."

The example in Fig. 4 described above explains that game device 30A is used to purchase the game content. In one aspect, user A may purchase the game content, for example, with a general-purpose PC or a smartphone rather than game device 30. In this case, the user who purchased the game content may be able to select the location of the game content after purchase.

In the example described above, though game device 30 transmits the insertion request or the removal request, a general-purpose PC or a smartphone may transmit the insertion request or the removal request.

Though the example described above explains that a sensor such as an infrared sensor is used to determine whether or not game device 30A and game device 30S are located within the prescribed range in Fig. 7, another method may be used. For example, a global positioning system (GPS) sensor may be employed. In this case, an actual distance between game devices 30 can be measured. Alternatively, a plurality of methods may be used.

The example described above explains that data is associated by using a single table. For example, the account of the user and the game content are directly associated with each other in the table shown in Fig. 5. Data, however, may indirectly be associated between/among a plurality of tables. Furthermore, associated data may be stored in a different server.

In the first embodiment, even when the insertion request to insert content A is issued from game device 30A while content A is being executed with game device 30S, the insertion request is rejected. When the insertion request is issued from another game device 30 or when the removal request is issued to game device 30S, however, content A being executed with game device 30S may forcibly be terminated and content A may be removed. Alternatively, an indication of issuance of the insertion request or the removal request from another game device may be shown on the display screen of game device 30S to encourage termination of execution of content A with game device 30S. At this time, a message indicating that the content will forcibly be terminated after lapse of a prescribed time period may be shown.

In the example above, the virtual game card is insertable by registration of game device 30 as the registered terminal. Registration of game device 30 as the registered terminal, however, does not have to be required. By way of example, user A may be able to insert the virtual game card owned by user A also in at least one of game devices 30 with which the account of user A is associated.

In the first embodiment, in registration of second game device 30 as the registered terminal, short-distance checking as to the distance from first game device 30 is requested. Short-distance checking, however, may be requested, for example, every prescribed period or every number of times of insertion or removal. Alternatively, short-distance checking may be requested each time of issuance of the insertion request or the removal request.

In the second embodiment, short-distance checking is requested each time play of the content with game device 30 of another user belonging to a group is temporarily permitted. A request for short-distance checking, however, does not have to be issued any more to game device 30 that has once been subjected to short-distance checking, or for a prescribed period or for a prescribed number of times.

Though short-distance checking between game devices 30 is requested in the first or second embodiment, short-distance checking does not have to be requested.

The example in the second embodiment described above explains that group A is a family group to which users A and B belong. The group, however, is not limited to the family, but may be, for example, a group of friends. An upper limit number of users in a group up to which the users can belong (for example, fifteen) may be set in advance.

In the example in the second embodiment described above, a plurality of users who belong to a certain group may receive common services. For example, when at least one of users belonging to a group subscribes a "family plan," each user belonging to the group may receive services corresponding to the "family plan." Alternatively, one user among users belonging to a certain group may be granted the special authority in connection with the group. Examples of the special authority include management of participation or withdrawal of another group member, checking and management of a status of play by another user (typically a child user), and management as to whether or not a game content can be purchased. The authority for checking, management, or the like of the status of play by another user may be granted also to another user, without being limited to one person with the special authority.

The example in the second embodiment described above explains such management by server 10 that one user can belong only to a single group. The user, however, may be permitted to belong to a plurality of groups.

In the example in the second embodiment described above, users belonging to the same group are permitted to temporarily use a content. Even users not belonging to the same group, however, may be permitted to temporarily use a content. An attribute itself of a group does not have to be set.

The example in Fig. 14 described above explains that temporary use of the virtual game card of content A inserted in game device 30A is permitted. The virtual game card temporary use of which is permitted, however, does not have to be inserted in game device 30A. Specifically, even when the virtual game card is owned by user A and the location of the virtual game card is server 10, user A may temporarily be permitted to use the virtual game card. At this time, at least one registered terminal of user A may be subjected to short-distance determination as to the distance from game device 30 permitted to temporarily use the virtual game card.

In the example described above, server 10 performs the determination processing for determining whether or not game device 30 is within the prescribed range from another game device 30. The determination processing, however, may be performed in game device 30 and only a result of the determination processing may be transmitted from game device 30 to server 10. Alternatively, both of game device 30 and server 10 may perform the determination processing.

The example in Fig. 8 described above explains that server 10 that has accepted the insertion request from game device 30S determines that content A is virtually insertable in game device 30S when content A is not being executed with game device 30A even in a state where content A has been inserted in game device 30A. Server 10, however, may determine that content A is not virtually insertable in game device 30S when content A has been inserted in game device 30 other than game device 30S. In other words, server 10 may determine that the virtual game card is insertable in at least one of game devices 30 only when the location of the virtual game card is server 10.

In the examples in Figs. 9 to 12 described above, a content, temporary use of which by another user is permitted, or a content, temporary use of which is permitted by another user, may also be shown on display 31. At this time, permission of temporary use by another user or permission by another user of temporary use may be shown such that the user who operates the game device can know that fact. By way of example, in Fig. 10, when temporary use of content A by another user is permitted, a manner of representation of object T1 may be changed such that object T1 is translucent. Icon IA may also be shown. Information indicating the user who is permitted to temporarily use the content, such as an icon indicating the user by way of example, may be shown, for example, together with object T1. A period during which use by another user is permitted may be shown, for example, together with object T1. For example, when temporary use of content D is permitted by another user in Fig. 10, by way of example, the manner of representation of object T4 may be changed, or information indicating the user who permits temporary use or a period during which content D can be used may be shown, for example, together with object T4. Icon IB may also be shown.

In the example in Fig. 9 or 10 described above, when there are a content that can be handled as the virtual game card and a content otherwise (for example, a free content), they may be shown separately from each other. By way of example, those contents may be shown in sets in different regions on one display screen, or may be shown separately on different pages or in different tabs.

The first to third embodiments described above illustrate game device 30 by way of example of the terminal with which the account or the content is associated. In another example, however, when a platform application for execution of various game contents is installed in such an apparatus as a general-purpose PC or a smartphone, the account or the content may be associated with that application. An apparatus in which such an application is installed or executed may be regarded as the "terminal."

In the first to third embodiments described above, the content is a game content. In another embodiment, the content may be a content such as a book, a movie, or music. By way of example, it is assumed that a user who logs in should be selected in an example where a moving image viewer application is installed in a PC, a smartphone, or the like, and that the moving image viewer application is executed. Each user is assumed to be able to purchase or rent moving images viewable in the moving image viewer application. For example, contents of the present disclosure are applicable also to such a case. Specifically, when a certain device (or a moving image viewer application associated with the certain device) has the right to view a certain content, the content is viewable whichever user may log in to the moving image viewer application, and no user is able to view the content in other devices or moving image viewer applications of other devices.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

## Claims

1. A method performed by one or more processors, the method comprising:
associating a first account with a game content obtained by the first account through a network (NW) (S104);
associating the first account with each of a plurality of terminals (30) being configured to be associated with one or more accounts (S 102);
changeably associating each game content obtained by the first account with one terminal selected from the plurality of terminals with which the first account is associated (S302); and
permitting play of the game content, with the one terminal with which the game content is associated, by one or more accounts not limited to the first account, and restricting play of the game content with a terminal other than the one terminal of the plurality of terminals with which the first account is associated (S304).

2. The method according to claim 1, further comprising
permitting play of the game content, with the one terminal with which the game content is associated regardless of whether the one terminal is on-line or off-line.

3. The method according to claim 1 or 2, further comprising canceling association between the one terminal and the game content (S306).

4. The method according to any one of claims 1 to 3, further comprising changeably associating again the game content, association of which with the one terminal has been canceled, with at least one terminal selected from the plurality of terminals with which the first account is associated.

5. The method according to any one of claims 1 to 4, further comprising registering one or more terminals as registered terminal of the first account, wherein
the registered terminal of the first account is configured to be associated with the game content associated with the first account, and
the number of the one or more terminals as registered terminal of the first account is limited to a predetermined number (S 107).

6. The method according to claim 5, wherein
each of the plurality of terminals can be registered as a registered terminal for each different account.

7. The method according to claim 5 or 6, further comprising determining whether one terminal of the plurality of terminals is located within a predetermined range from a registered terminal of the first account (S206), wherein
the registering one or more terminals as registered terminal of the first account includes additionally registering, when the one terminal is determined as being within the predetermined range from the registered terminal in the determining, the one terminal as the registered terminal (S207).

8. The method according to claim 5, further comprising:
determining whether a terminal different from the registered terminal is located within a predetermined range from a registered terminal of the first account; and
permitting, when the terminal different from the registered terminal is determined as being located within the prescribed range from the registered terminal, the terminal different from the registered terminal to temporarily play the game content and restricting play of the game content with a terminal other than the terminal different from the registered terminal.

9. The method according to claim 8, wherein
each of the plurality of accounts is permitted to belong to a group, a finite number of accounts being permitted to belong to the group, each of the plurality of accounts being permitted to belong to only a single group, and
the terminal different from the registered terminal permitted to temporarily play the game content is associated with an account belonging to a same group to which the first account associated with the game content belongs.

10. The method according to claim 8, further comprising setting the game content to a state in which the game content is associated with no terminal, based on end of temporary use (S414).

11. The method according to any one of claims 1 to 10, further comprising permitting, in response to input by the first account, also play of the game content by the first account with the terminal associated with the first account when the game content and the first account are associated with each other, regardless of whether the one terminal (30S) associated with the first account is associated with the game content.

12. The method according to any one of claims 1 to 11, further comprising showing, in at least one of the plurality of terminals with which the first account is associated, a plurality of game contents associated with the first account, in such a manner that a game content associated with the terminal and a non-associated game content not associated with the terminal are distinguishable from each other.

13. The method according to claim 12, wherein
the non-associated game content is shown in such a manner as being indistinguishable as to whether the non-associated game content is associated with at least one of the plurality of terminals with which the first account is associated or associated with none of the terminals.

14. A system (100) comprising:
a processor (14); and
a storage medium (16) where an instruction is stored, wherein
the processor, by executing the instruction, causes the system to perform the method according to any one of claims 1 to 13.

15. A machine-readable medium (16) where a machine-readable instructions is stored, wherein
a processor (14) of a machine, by executing the instruction, causes the machine to carry out the method according to any one of claims 1 to 13.
